# FASCICULE DE BREVET EUROPEEN

(11) **EP 2 285 644 B1**
(45) Date de publication et mention de la délivrance du brevet: **04.05.2016**
(21) Numéro de dépôt: 09750006.0
(22) Date de dépôt: 05.05.2009
(51) Int. Cl.: B62D 12/02, B62D 47/00, B60D 1/52, B60D 1/14, B60D 1/173, B60D 1/167, B60D 1/155, G05D 1/02, B62D 59/04, B62D 53/00, B62D 47/02

(54) **LIAISON ARTICULEE DISSOCIABLE ENTRE DEUX MODULES ROUTIERS SUCCESSIFS D'UN TRAIN ROUTIER**
TRENNBARE GELENKTE KUPPELANORDNUNG VON ZWEI FAHRZEUMODUL EINES STRASSENZUGS
DISCONNECTABLE ARTICULATED CONNECTION BETWEEN TWO SUCCESSIVE ROAD-GOING MODULES OF A ROAD TRAIN

(30) Priorité: 06.05.2008 FR 0802522
(43) Date de publication de la demande: 23.02.2011
(73) Titulaire: Lohr Electromecanique, 67980 Hangenbieten (FR)
(72) Inventeur: ANDRE, Jean-Luc, F-67120 Molsheim (FR)
(74) Mandataire: Merckling, Norbert
(86) Numéro de dépôt international: PCT/FR2009/000526
(87) Numéro de publication internationale: WO 2009/141525

(56) Documents cités:
- EP-A- 0 277 305
- EP-A- 1 864 834
- WO-A-00/46050
- WO-A-2007/132121
- DE-A1-102005 035 561
- FR-A- 712 379
- JP-A- 2000 247 266

## Description

La présente invention se rapporte à une liaison articulée dissociable entre deux modules routiers successifs motorisés pour la constitution d'un train routier formé d'une pluralité de modules routiers motorisés articulés de façon dissociable les uns à la suite des autres, au type décrit dans WO 2007/132121A1.

La présente invention se rapporte également au module routier apte à être attelé et articulé de part et d'autre de et à ses semblables pour constituer un train routier. Elle se rapporte aussi au train routier ainsi formé.

Cette liaison articulée dissociable se compose de moyens d'accouplement prévus sur le module routier meneur d'une suite de deux modules routiers et d'une pièce de timon d'attelage portée à l'avant par le module routier suiveur. La pièce de timon présente une extrémité arrière articulée à pivotement autour d'un axe vertical sur un centre de pivotement indépendant de l'essieu adjacent ou de l'ensemble directionnel du véhicule suiveur et une extrémité avant qui vient s'accoupler de façon dissociable à l'arrière du module meneur mais fixe en direction par rapport à ce dernier. Ces liaisons laissent des degrés de liberté suffisants en roulis et en tangage pour un roulage en toute sécurité ainsi qu'en cas de besoin une limitation angulaire directionnelle sur le module routier suiveur.

Il peut exister une liaison d'asservissement entre le timon et la commande de direction des modules suiveurs ou entre le timon et le module suiveur. Cette liaison peut être réalisée fonctionnellement sous la forme d'une consigne en trajectoire pour le module suiveur.

Comme il n'y a qu'un chauffeur pour le convoi, il est important que le comportement dynamique de ce petit train, soit le plus près possible du comportement d'un module isolé, en raison surtout du fait que le chauffeur passe sans transition d'un mode à véhicule isolé à un mode groupé.

Cette liaison mécanique inter-modules doit imposer la trajectoire du véhicule suiveur, et garantir une distance minimale entre les modules en ligne droite comme en courbe, et porter les connexions électriques pneumatiques ou autres pour les besoins d'exploitation.

Le transport urbain et interurbain de personnes par des véhicules routiers s'oriente actuellement vers des solutions à trains routiers qui sont des rames routières formées de plusieurs modules routiers indépendants à l'état isolés mais regroupables en rames ou trains routiers puis dissociables rapidement.

Pour plusieurs besoins, dont l'exploitation temporaire de trains routiers ou de véhicules séparés, le rapatriement de véhicules d'un endroit vers un autre assimilable à du dépannage et d'autres, il faut réduire au maximum dans tous les cas la distance entre les modules pour, entre autres, rendre impossible la traversée du convoi par les riverains, les passants, les vélos, etc.... Généralement, cette sécurité est assurée, pour les petits véhicules touristiques par exemple, par des chaines peu esthétiques présentes de part et d'autre du timon d'attelage.

Dans le cadre de l'invention, il n'est pas nécessaire de prévoir des protections supplémentaires pour remplir cette fonction.

La flexibilité et la modularité de cette formule de transport urbain en commun la rendent particulièrement séduisante à tous points de vue aux décideurs de toutes les villes en demande d'équipement de transport en commun.

Pour la mise en oeuvre de cette technique de transport se pose de suite deux problèmes importants qu'il faut résoudre simultanément. Il s'agit d'une part de la commodité, la rapidité et la fiabilité de la liaison articulée inter-modules et de sa dissociation et d'autre part de la possibilité d'intercirculation pour les passagers.

Pour la solution au premier problème, il faut disposer d'une liaison articulée adaptée et rapidement dissociable, garantissant au moins en ligne droite un espace minimal inter-modules, ce qui est l'objet de la présente invention qui est définie par la revendication 1.

Selon la présente invention, la liaison dissociable est un attelage par exemple court, comportant une pièce de timon ou une barre de traction fixe en direction par rapport à l'axe longitudinal du module meneur. Cette liaison articulée permet d'imposer une trajectoire quasi monotrace des véhicules suiveurs. Cette liaison articulée est dissociable rapidement du module meneur et la pièce de timon est portée par le module suivant au niveau de sa partie avant. De même cette liaison comprend tous les raccordements électrique, pneumatique ou autres nécessaires au passage des informations de commande contrôle et sécurité entre les modules.

Cette solution s'applique également à des modules routiers plus petits ne transportant que quelques personnes, voire une seule personne, pour lesquels on ne cherche pas de passage d'intercirculation entre les modules et pour lesquels la distance entre les modules doit aussi être la plus réduite possible pour des raisons de sécurité. De même dans ce cas, la trajectoire des véhicules suiveurs doit aussi être complètement maitrisée.

L'invention se rapporte également au module routier présentant les caractéristiques ci-dessus et apte à être attelé et articulé de part et d'autre à ses semblables pour constituer un train routier. Elle se rapporte aussi au train routier ainsi formé.

D'autres caractéristiques et avantages de l'invention apparaîtront dans la description qui suit, donnée à titre d'exemple et accompagnée des dessins dans lesquels :
- la figure 1 est une vue en plan de plusieurs modules routiers reliés entre eux par la liaison mécanique objet de l'invention en configuration de ligne droite,
- la figure 2 est une vue en plan de plusieurs modules routiers reliés entre eux en configuration de prise de virage,
- la figure 3 est une vue générale schématique de profil montrant une série de trois modules routiers articulés entre eux l'un à la suite de l'autre,

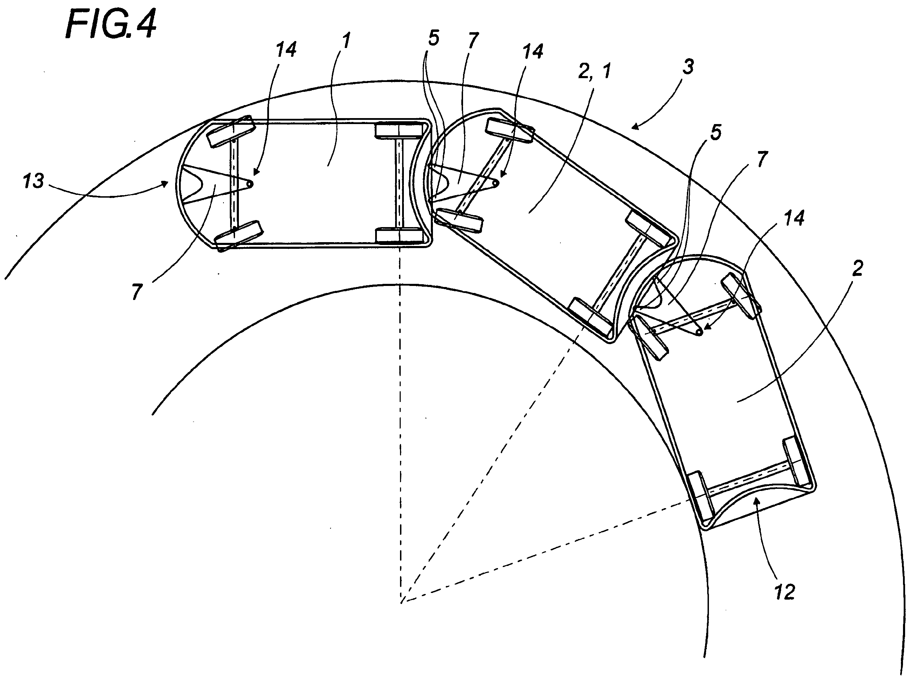

- la figure 4 est une vue en plan d'un train routier formé de petits modules.

La présente invention se rapporte non seulement à la liaison articulée entre deux modules routiers, mais également au module routier présentant les caractéristiques ci-dessus et apte à être attelé et articulé à ses semblables pour constituer un train routier et au train routier ainsi formé.

La présente invention selon la revendication 1 procède de l'idée générale inventive qui consiste à prévoir, comme liaison articulée dissociable entre deux modules routiers successifs, l'un meneur 1 et l'autre suiveur 2 constituant à l'état associés un train routier 3, un ensemble de liaison dissociable et d'orientation 4 formé de deux parties dissociables. Ces deux parties dissociables se composent de moyens d'association et de dissociation 5 rapides et d'un dispositif d'attelage 6 par exemple à pièce de timon 7 portée sous l'avant du module routier suiveur 2 et fixe en orientation par rapport à l'axe longitudinal médian du module routier meneur.

De façon générale, il s'agit d'un ensemble de liaison et d'orientation 4 à caractère dissociable dont les caractéristiques de ligne droite procurent un espace 8 inter-modules de petite longueur et de préférence de la plus petite longueur possible.

Selon l'invention, la pièce de timon 7 se termine d'un côté sous le module suiveur 2 sous la partie avant de celui-ci sous laquelle il est monté à pivotement par son extrémité arrière 9 en position longitudinale médiane à proximité de l'axe de l'essieu avant. La pièce de timon 7 se termine de l'autre côté par une extrémité avant 10 présentant des moyens d'association et de dissociation 5 complémentaires de préférence du type rapides.

Il peut s'agir de moyens d'accouplement et de désaccouplement rapides 11 ou de fixation dissociable ou tout autre moyen permettant d'assurer la séparation puis la réunion des deux parties de l'attelage.

Ces moyens peuvent être associés à des moyens automatiques de verrouillage et de déverrouillage ainsi qu'à des moyens d'autocentrage.

De préférence, la pièce de timon se trouve dans le périmètre d'emprise au sol de chaque module suiveur 2.

Selon l'application, cette liaison articulée dissociable est conçue pour que l'espace libre existant entre les deux modules successifs soit le plus court possible.

Comme indiqué, il peut s'agir d'une liaison à attelage court dissociable.

Pour la description, on considère qu'un train routier est formé d'une pluralité de modules routiers par exemple identiques, et que les modules de chaque couple de deux modules routiers successifs sont reliés de la même façon articulée et dissociable. Ceci permet de supposer que la description ci-après est complète si elle porte sur une seule liaison articulée dissociable avec toutes ses variantes.

Ainsi, on ne s'intéressera ci-après qu'à deux modules routiers successifs, l'un amont et l'autre aval appelés respectivement meneur 1 et suiveur 2 d'un train routier composé d'une pluralité de modules routiers identiques ou analogues entre eux et identiques ou analogues à ceux représentés sur les figures et utilisés à titre d'exemple.

Chaque module routier motorisé d'un couple de deux modules routiers successifs 1 et 2 comporte une face frontale arrière 12 et une face frontale avant 13 équipées pour pouvoir réaliser l'accouplement et s'articuler entre eux.

L'essentiel est de pouvoir constituer la liaison articulée dissociable entre deux modules successifs par un accouplement compatible avec un espace inter-modules de petite longueur en configuration de ligne droite.

Au bas de la face frontale arrière 12 du module meneur 1 se trouvent montés les moyens d'accouplement et de désaccouplement rapides 11 de préférence avec verrouillage et déverrouillage automatiques et autocentrage pour un ensemble d'attelage dont la pièce de timon 7 assure la liaison mécanique articulée dissociable avec le module suiveur 2.

Il peut s'agir d'une liaison de traction totale, mais aussi d'une liaison de traction partielle c'est-à-dire d'une liaison par laquelle ne passent que peu d'efforts de traction car le module suiveur 2 garde et met en oeuvre sa puissance motrice ou une partie de celle-ci qu'un automate commande en utilisation totale ou partielle. N'ayant qu'un seul chauffeur pour conduire le train, les liaisons nécessaires aux commandes du contrôle de la traction et du freinage passent par des câbles intégrés à la liaison dont la connexion est automatique lors de l'attelage.

Cette pièce de timon peut être un ensemble mécanique en triangle, en T, en I ou une simple barre de traction. Le timon de l'ensemble d'attelage court peut être réalisé autrement par différents moyens techniques existant actuellement.

La pièce de timon 7 présente une extrémité avant venant se monter automatiquement avec verouillage et autocentrage et de façon désolidarisable avec les moyens d'accouplement et de désaccouplement rapides existant à l'arrière du module meneur 1 afin de garantir à la pièce de timon une orientation fixe dans la direction de l'axe longitudinal du module meneur 1.

La pièce de timon 7 se termine du côté aval par une extrémité arrière montée pivotante ou faisant office d'une articulation de pivotement 14 coopérant avec un centre de pivotement indépendant de l'essieu directeur ou de l'ensemble directionnel du module routier suiveur 2 ou monté pivotante sur le châssis de celui-ci. La localisation de cette articulation est choisie pour permettre une trajectoire quasi monotrace des véhicules suiveurs.

Bien entendu, des jeux et un degré de liberté en pivotement autour de l'axe de tangage et autour de l'axe de roulis sont nécessaires pour absorber les variations de forme de la route et les débattements liés au roulage.

De façon préférentielle, la pièce de timon 7, est portée par le module routier suiveur 2. Elle se trouve à un niveau bas, en retrait sous la face frontale avant 13 de manière à ne pas être en saillie par rapport à l'avant du module suiveur 2 pour des raisons de protection mécanique, mais aussi d'esthétique.

Inversement, et de façon également préférentielle mais non limitative, les moyens d'accouplement et de désaccouplement portés par la partie arrière du module meneur 1 se trouvent en partie basse en saillie par rapport à la face frontale arrière 12 du module meneur 1 en regard l'un de l'autre et protégés mécaniquement par un rebord saillant 15.

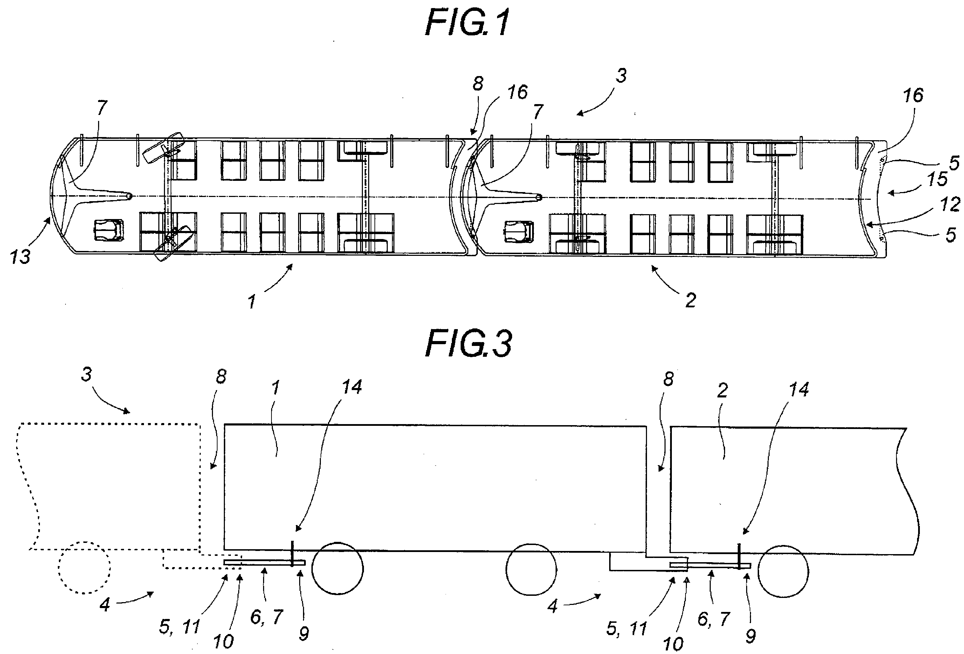

Ce rebord saillant 15 bien visible sur la figure 3, peut présenter une partie supérieure plane jouant le rôle de plate-forme 16 de plancher pour le passage à niveau des passagers dit passage d'intercirculation entre les deux modules, sa largeur définissant la profondeur de l'espace inter-modules.

La partie supérieure de cette plate-forme 16 ou celle d'une surépaisseur ou d'une prolongation vers le haut ou tout équivalent est sensiblement de niveau avec les planchers des modules routiers de part et d'autre.

Pour que l'espace intermédiaire 8 entre les modules soit le plus court possible, dans une version préférentielle, il est nécessaire tout en permettant tous les angles de virage habituels, que les formes des faces en regard des modules routiers successifs soient dégageantes et non interférantes.

A cet effet, des formes incurvées telles que représentées sont souhaitables mais non limitatives, on peut aussi imaginer des formes incurvées ou droites à l'arrière du véhicule qui forment ainsi une barrière pour empêcher toute intrusion entre les modules.

On précise qu'il est préférable d'adopter des formes circulaires, notamment celles dont le centre est celui du centre de pivotement de la pièce de timon 7.

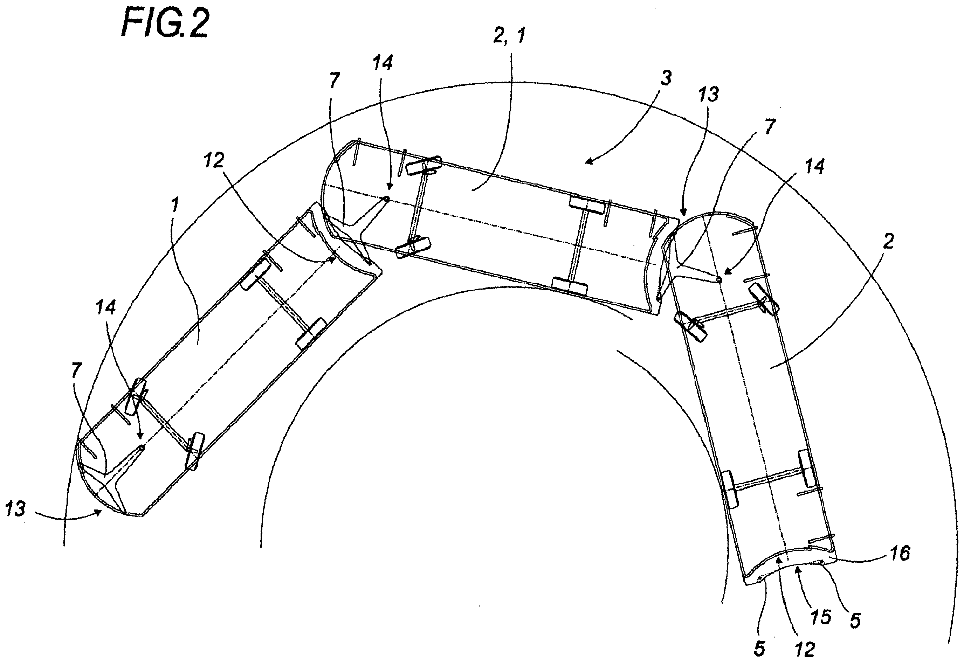

Comme visible sur les figures 1, 2 et 3, la variante représentée à titre d'exemple, qui est celle à faces frontales avant 13 et arrière 12 incurvées des modules routiers permet de réduire notablement la profondeur de l'espace inter-modules et donc la largeur de la plate-forme 16 qui peut dans une variante, servir de support au passage d'intercirculation des voyageurs.

Pour assurer une continuité planaire des moyens d'accouplement avec la pièce de timon 7, les deux parties de la liaison articulée dissociable inter-modules se trouvent au même niveau.

D'une part, la pièce de timon 7 est placée à un niveau bas sous la carrosserie du module routier suiveur 2 de préférence effacée et non en saillie par rapport à sa face frontale avant 13 et d'autre part les moyens d'accouplement et de désaccouplement se trouvent en regard de l'extrémité correspondante de la pièce de timon 7.

Comme indiqué, ces moyens d'accouplement et de désaccouplement peuvent se trouver à l'extrémité d'une saillie 15 à partie supérieure plane en plate-forme 16 à la base de l'arrière du module meneur 1, plate-forme qui se trouve au même niveau que le plancher des deux modules routiers successifs et sert de support de plancher pour le passage d'interciculation dans la variante des modules routiers avec communication.

La largeur de la plate-forme 16 représente alors au plus, la largeur de l'espace entre les faces en regard des modules routiers.

Un moyen supplémentaire de rappel en position longitudinale de la pièce de timon 7 est prévu de manière à éviter de trouver un module suiveur avec une pièce de timon 7 en biais après désaccouplement si celui-ci s'effectue en courbe. Ce rappel dans l'axe du véhicule est aussi nécessaire pour permettre l'accouplement aisé des modules.

Il existe aussi des moyens de butée angulaire permettant de limiter l'angle d'orientation du timon pour éviter les orientations dangereuses notamment en manoeuvres.

A cet effet, on peut prévoir des butées physiques ou des butées virtuelles.

Finalement, afin de diminuer les efforts directionnels dans le timon, on peut prévoir des moyens d'assistance à l'orientation des roues avant du module suiveur 2.

La présente invention se rapporte également au module routier présentant les caractéristiques ci-dessus et apte à être attelé et articulé à ses semblables pour constituer un train routier et au train routier ainsi formé.

Ainsi, il comporte entre autres, l'ensemble de liaison dissociable et d'orientation avec une dispositif d'attelage (6) par exemple la pièce de timon 7 et les moyens d'accouplement et de désaccouplement avec verrouillage et déverrouillage et en tant que variante, le rebord en saillie 15 à plate-forme supérieure 16.

## Revendications

1. Liaison articulée dissociable entre deux modules routiers d'un train routier formé d'une pluralité de modules routiers successifs motorisés dont au moins un module routier meneur (1) et un module routier suiveur (2) chacun présentant à l'avant un essieu directeur, comprenant
. un ensemble de liaison dissociable et d'orientation (4) comprenant un dispositif d'attelage (6) et des moyens d'association et de dissociation (5) rapides, et telle que
. le dispositif d'attelage (6) est une pièce de timon (7) portée par le module suiveur (2) sous sa partie avant et montée pivotante par rapport à son châssis et indépendante en rotation de son dit essieu directeur ainsi que fixe en orientation par rapport à l'axe longitudinal du module meneur (1), la pièce de timon (7) étant montée pivotante par son extrémité arrière sous l'avant du châssis du module suiveur en position longitudinale médiane à proximité de l'axe de son dit essieu directeur,
. les moyens d'association et de dissociation sont formés à chaque fois de deux parties complémentaires l'une placée à l'arrière de chacun des modules et l'autre placée à l'extrémité avant de la pièce de timon (7) constituant la partie dissociable de la liaison articulée, la pièce de timon (7) restant portée par le module suiveur après dissociation,
et que la liaison dissociable présente
. des moyens de débattement en roulis et en tangage au niveau du centre de pivotement, et
. des moyens de butée angulaire.

2. Liaison articulée selon la revendication 1 **caractérisée en ce que** la pièce de timon (7) est du type timon télescopique.

3. Liaison articulée selon l'une quelconque des revendications précédentes **caractérisée en ce que** l'espace existant entre le module meneur (1) et le module suiveur (2) est réduit de façon à rendre impossible la traversée du convoi par un passant.

4. Liaison articulée selon la revendication 1 **caractérisée en ce que** la pièce de timon (7) est montée en partie basse avant du module suiveur (2).

5. Liaison articulée selon la revendication 1 **caractérisée en ce que** la pièce de timon (7) se termine à l'avant du module suiveur (2) et **en ce que** la partie correspondante en regard sur le module meneur (1) de la liaison articulée entre le module meneur (1) et le module suiveur (2) est une saillie (15) de la partie arrière basse du module meneur (1).

6. Liaison articulée selon la revendication précédente **caractérisée en ce que** la saillie (15) présente une partie supérieure plane sous la forme d'une plate-forme (16) dont la partie supérieure est située sensiblement au même niveau que le plancher de chaque module routier successif pour servir de plancher au passage entre les modules.

7. Liaison articulée selon la revendication 1 **caractérisée en ce que** la pièce de timon (7) et les moyens d'association et de dissociation (5) sont en continuation coplanaire.

8. Liaison articulée selon la revendication 1 **caractérisée en ce que** l'extrémité avant de la pièce de timon (7) (2) est en retrait par rapport à la face frontale avant (13) du module suiveur (2).

9. Liaison articulée selon la revendication 1 **caractérisée par** des moyens de rappel en position centrale de la pièce de timon (7).

10. Liaison articulée selon la revendication 1 **caractérisée en ce que** la liaison articulée présente une butée angulaire de chaque côté de virage à droite et à gauche.

11. Liaison articulée selon la revendication 1 **caractérisée par** des moyens d'assistance à l'orientation des roues avant du module suiveur (2) en fonction de l'orientation de la pièce de timon (7).

## Patentansprüche

1. Trennbare Gelenkverbindung zwischen zwei Straßenmodulen eines Lastzuges, bestehend aus mehreren aufeinanderfolgenden, motorgetriebenen Modulen, darunter mindestens ein Führungsmodul (1) und ein Beiwagen (2) jeweils vorne mit einer Führungsachse, umfassend:
• eine trennbare Verbindungs- und Richtungseinheit (4), umfassend eine Kupplungsvorrichtung (6) und Einrichtungen zur schnellen Verbindung und Trennung (5); und so dass
• es sich bei der Kupplungsvorrichtung (6) um ein Deichselteil (7) handelt, das am Beiwagen (2) unter dem Vorderteil befestigt ist und gegenüber dem Fahrgestell schwenkbar montiert ist und in Rotation unabhängig von der genannten Führungsachse sowie bezogen auf die Längsachse des Führungsmoduls (1) fest befestigt ist, wobei das Deichselteil (7) schwenkbar am hinteren Ende unter der Fahrgestellfront des Beiwagens in Längsmittelposition in der Nähe von der genannten Führungsachse befestigt ist,
• dass die Einrichtungen zur Verbindung und Trennung jeweils aus zwei einander ergänzenden Teilen bestehen, von denen einer am Heck jedes Moduls und der andere am anderen Ende vor dem Deichselteil (7) positioniert ist, das den abtrennbaren Teil der Gelenkverbindung bildet, wobei das verbleibende Deichselteil (7) nach der Trennung am Beiwagen befestigt bleibt,
und dass die trennbare Verbindung
• Vorrichtungen zum Ausgleich bei Roll- und Stampfbewegungen in Höhe des Schwenkpunktzentrums sowie
• Winkelanschlagsvorrichtungen aufweist.

2. Trennbare Gelenkverbindung gemäß Anspruch 1, **dadurch gekennzeichnet, dass** es sich bei dem Deichselteil (7) um einen Teleskopdeichselteil handelt.

3. Trennbare Gelenkverbindung nach einem der vorstehenden Anspruche, **dadurch gekennzeichnet, dass** der vorhandene Raum zwischen dem Führungsmodul (1) und dem Beiwagen (2) so klein ist, dass es für einen Passanten unmöglich ist, das Gespann zu übersteigen.

4. Trennbare Gelenkverbindung gemäß Anspruch 1, **dadurch gekennzeichnet, dass** das Deichselteil (7) im vorderen unteren Teil des Beiwagens (2) montiert ist.

5. Trennbare Gelenkverbindung gemäß Anspruch 1, **dadurch gekennzeichnet, dass** das Deichselteil (7) an der Front des Beiwagens (2) endet und dadurch, dass das entsprechende Teil gegenüber, am Fühningsmodul (1) der Gelenkverbindung zwischen dem Fühningsmodul (1) und dem Beiwagen (2) von einem Überstand (15) am unteren hinteren Teil des Fühningsmoduls (1) gebildet wird.

6. Trennbare Gelenkverbindung gemäß dem vorstehenden Anspruch, **dadurch gekennzeichnet, dass** der Überstand (15) einen oberen flachen Teil in Form einer Plattform (16) aufweist, deren oberer Teil deutlich auf gleicher Höhe liegt, wie der Boden jedes der aufeinanderfolgenden Beiwagen, um beim Übergang zwischen den Modulen als Boden zu dienen.

7. Trennbare Gelenkverbindung gemäß Anspruch 1, **dadurch gekennzeichnet, dass** das Deichselteil (7) und die Einrichtungen zur Verbindung und Trennung (5) sich komplanar fortsetzen.

8. Trennbare Gelenkverbindung gemäß Anspruch 1, **dadurch gekennzeichnet, dass** das vordere Endstück des Deichselteils (7) gegenüber der Frontseite (13) des Beiwagens (2) rückversetzt ist.

9. Trennbare Gelenkverbindung gemäß Anspruch 1, **gekennzeichnet durch** Rückstellvorrichtungen in zentraler Position des Deichselteils (7).

10. Trennbare Gelenkverbindung gemäß Anspruch 1, **dadurch gekennzeichnet, dass** die trennbare Gelenkverbindung auf jeder Seite einen Winkelanschlag für Rechts- und Linkskurven aufweist.

11. Trennbare Gelenkverbindung gemäß Anspruch 1, **gekennzeichnet durch** Lenkunterstützungsvorrichtungen der Vorderräder des Beiwagens (2) in Abhängigkeit von der Ausrichtung des Deichselteils (7).

## Claims

1. A disconnectable articulated connection between two successive road modules of a road train formed of a plurality of successive motorized road modules wherein at least one leading road module (1) and one trailing road module (2) each has at the front a directional axle, comprising:
• a disconnectable connection and orientation assembly (4) comprising a hitching device (6) and rapid connection and disconnection means (5),
and such that:
• the hitching device (6) is a drawbar component (7) supported by the trailing module (2) below its front portion and pivotably mounted relative to its chassis and independent in rotation relative to its said directional axle, as well as fixed in orientation relative to the longitudinal axis of the leading module (1), the drawbar component (7) being pivotably mounted by its rear extremity beneath the front of the chassis of the trailing module in median longitudinal position near the axis of its said directional axle;
• the connection and disconnection means are each time formed of two complementary portions, one placed at the rear of each of the modules and the other placed at the front extremity of the drawbar component (7) constituting the disconnectable portion of the articulated connection, the drawbar component (7) being supported by the trailing module after disconnection;
and such that the disconnnectable connection has:
• means for rolling and pitching displacement at the level of pivot center, and
• angular block means.

2. An articulated connection according to claim 1 **characterized in that** the drawbar component (7) is a telescopic type drawbar.

3. An articulated connection according to any one of the preceding claims **characterized in that** the space existing between the leading module (1) and the trailing module (2) is short in order to make it impossible for people to cross the convoy.

4. An articulated connection according to claim 1 **characterized in that** the drawbar component (7) is mounted on the front lower portion of the trailing module (2).

5. An articulated connection according to claim 1 **characterized in that** the drawbar component (7) terminates in the front of the trailing module (2) and **in that** the corresponding opposing portion on the leading module (1) of the articulated connection between the leading module (1) and the trailing module (2) is a projection (15) from the lower rear portion of the leading module (1).

6. An articulated connection according to the preceding claim **characterized in that** the projection (15) has a plane upper portion in the form of a platform (16), the upper portion of which is situated essentially at the same level as the floor of each successive road module, serving as a floor for passing between modules.

7. An articulated connection according to claim 1 **characterized in that** the drawbar component (7) and the connection and disconnection means (5) are in coplanar continuation.

8. An articulated connection according to claim 1 **characterized in that** the front extremity of the drawbar component (7) is retracted from the forward face surface (13) of the trailing module (2).

9. An articulated connection according to claim 1 **characterized by** having recall means in the central position of the drawbar component (7).

10. An articulated connection according to claim 1 **characterized in that** the articulated connection has an angular block on each side for right and left turns.

11. An articulated connection according to claim 1 **characterized by** having a means for assisting front wheel orientation on the trailing module (2) depending upon the orientation of the drawbar component (7).
